# DEMANDE DE BREVET EUROPEEN

(11) **EP 1 202 230 A1**
(43) Date de publication de la demande: **02.05.2002**
(21) Numéro de dépôt: 01402779.1
(22) Date de dépôt: 25.10.2001
(51) Int. Cl.: G08B 17/103, G01N 21/53

(54) **Système de détection de fumée**

(30) Priorité: 25.10.2000 FR 0013696
(71) Demandeur: SA Sefi, 45600 Pithiviers (FR)
(72) Inventeur: Pasztor, Cécile, 91630 Cheptainville (FR); Desarnaud-Cauly, Laurent, 45300 Dadonville (FR)
(74) Mandataire: Habasque, Etienne Joel Jean-François

(57) **Abrégé**

Ce système de détection de fumée du type comportant deux parties (1,2) destinées à être placées à distance l'une de l'autre et comportant l'une, des moyens formant réflecteur (3) adaptés pour réfléchir un faisceau optique (4) en provenance de moyens d'émission correspondants (5) de l'autre partie du système, à destination de moyens de réception (6) de ce faisceau réfléchi, également implantés dans cette autre partie du système et des moyens d'analyse (7) de l'intensité du faisceau réfléchi pour détecter la présence de fumée entre les deux parties du système, est caractérisé en ce que les moyens d'émission (5) sont adaptés pour émettre un faisceau optique dans la gamme des longueurs d'ondes visibles pour faciliter le réglage de l'alignement de deux parties de ce système.

## Description

La présente invention concerne un système de détection de fumée.

Plus particulièrement, l'invention se rapporte à un tel système qui comporte deux parties destinées à être placées à distance l'une de l'autre et comportant l'une, des moyens formant réflecteur adaptés pour réfléchir un faisceau optique en provenance de moyens d'émission correspondants de l'autre partie du système, à destination des moyens de réception de ce faisceau réfléchi, également implantés dans cette autre partie du système.

Par ailleurs, ce système est également muni de moyens d'analyse de l'intensité du faisceau réfléchi pour détecter la présence de fumée entre les deux parties du système.

Cependant, les systèmes de ce type présentent un certain nombre d'inconvénients, notamment au niveau de leur installation qui est relativement longue et difficile.

En effet, tous ces systèmes utilisent des diodes d'émission d'un faisceau non visible, de sorte que l'alignement des deux parties du système nécessite un matériel spécifique et est relativement complexe à réaliser en raison du fait que celles-ci sont généralement installées en hauteur ou dans des endroits peu accessibles.

De plus, des outils de réglage tels que par exemple des multimètres ou des systèmes d'alignement optique, doivent être utilisés pour régler les moyens d'analyse en fonction de la portée, c'est-à-dire de la distance séparant les deux parties du système.

On conçoit que ceci se traduit par des difficultés d'installation.

Le but de l'invention est donc de résoudre ces problèmes.

A cet effet, l'invention a pour objet un système de détection de fumée du type comportant deux parties destinées à être placées à distance l'une de l'autre et comportant l'une, des moyens formant réflecteur adaptés pour réfléchir un faisceau optique en provenance de moyens d'émission correspondants de l'autre partie du système, à destination de moyens de réception de ce faisceau réfléchi, également implantés dans cette autre partie du système et des moyens d'analyse de l'intensité du faisceau réfléchi pour détecter la présence de fumée entre les deux parties du système, caractérisé en ce que les moyens d'émission sont adaptés pour émettre un faisceau optique dans la gamme des longueurs d'ondes visibles pour faciliter le réglage de l'alignement de deux parties de ce système.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure générale d'un système de détection de fumée selon l'invention ; et
- la Fig.2 représente plus en détail, un schéma synoptique de moyens électroniques entrant dans la constitution d'un tel système.

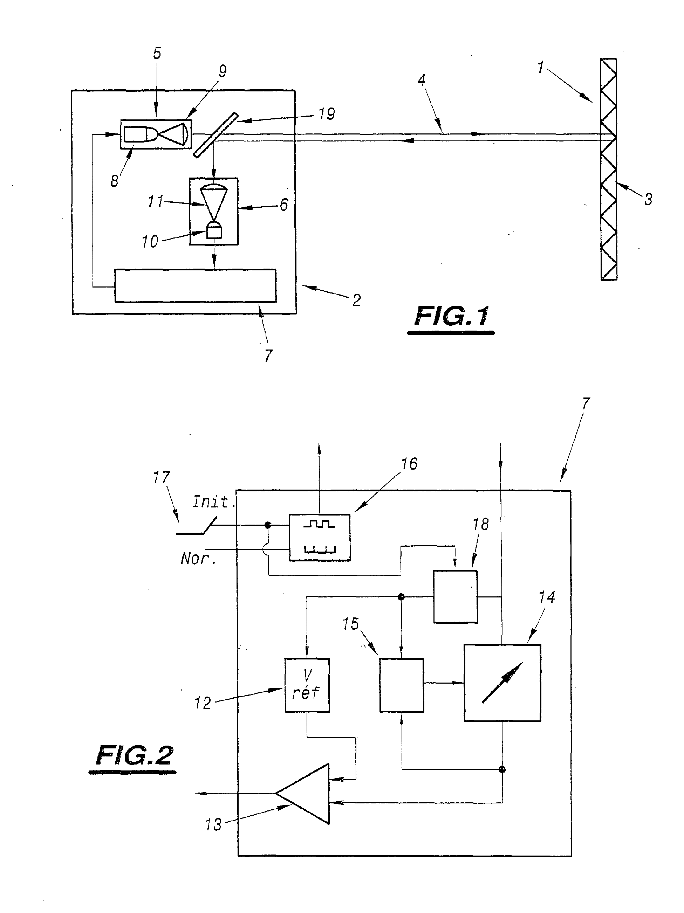

On a en effet représenté sur la figure 1, un système de détection de fumée qui comporte deux parties destinées à être placées à distance l'une de l'autre et dont l'une est désignée par la référence générale 1 et dont l'autre est désignée par la référence générale 2.

En fait, la partie 1 de ce système comporte par exemple des moyens formant réflecteur désignés par la référence générale 3, constitués par exemple par un réflecteur catadioptrique et adaptés pour réfléchir un faisceau optique tel que par exemple un faisceau 4 en provenance de moyens d'émission correspondants 5 de l'autre partie 2 du système, à destination de moyens de réception 6 de ce faisceau réfléchi, également implantés dans cette autre partie 2 du système.

De plus, il est prévu par exemple dans cette autre partie 2 du système, des moyens d'analyse 7 de l'intensité du faisceau réfléchi pour détecter la présence de fumée entre les deux parties du système.

Selon l'invention, les moyens d'émission 5 sont adaptés pour émettre un faisceau optique dans la gamme des longueurs d'ondes visibles pour faciliter le réglage de l'alignement des deux parties du système et ces moyens comprennent par exemple au moins une diode laser désignée par la référence générale 8 associée à une lentille désignée par la référence générale 9.

Les moyens de réception 6 comprennent quant à eux par exemple une photodiode 10 associée également à une lentille 11.

En fait, et comme cela est illustré de façon plus précise sur la figure 2, les moyens d'analyse 7 comprennent par exemple des moyens désignés par la référence générale 12, de stockage d'une valeur d'intensité de faisceau de référence et des moyens 13 de comparaison de l'intensité du faisceau réfléchi à cette valeur de référence pour détecter la présence de fumée entre les deux parties du système.

Comme cela sera décrit plus en détail par la suite, la valeur de référence stockée dans les moyens 12 est établie lors d'une phase d'initialisation du système après son installation.

Ces moyens d'analyse 7 sont également associés dans l'exemple décrit, à des moyens 14 de réglage automatique du gain de réception du faisceau, pour, lors d'une phase d'initialisation de ce système après son installation, établir le signal d'entrée de ces moyens d'analyse et plus particulièrement des moyens de comparaison 13, dans une plage de valeurs prédéterminées.

Ceci est réalisé par l'intermédiaire d'une boucle de réglage 15 de type classique, lors de la phase d'initialisation.

Ce réglage peut être facilité par exemple en utilisant de façon classique des moyens d'indication du niveau de correspondance entre le signal d'entrée de ces moyens d'analyse et la plage de valeurs prédéterminées.

C'est ainsi par exemple que l'on peut utiliser des diodes de différentes couleurs pour indiquer ce niveau de correspondance.

Les moyens d'émission du faisceau 5 sont associés à des moyens d'alimentation de ceux-ci en créneaux de tension, désignés par la référence générale 16 sur cette figure 2.

Ces moyens d'alimentation sont basculables sous la commande d'un commutateur 17 entre un premier état à rapport cyclique d'alimentation élevé, lors de l'installation du système, pour faciliter celle-ci et un second état à rapport cyclique faible pour réduire sa consommation en fonctionnement normal.

A titre d'exemple, le rapport cyclique élevé peut être supérieur à 50% et le rapport cyclique faible peut être compris entre 0,5 et 1,5%.

On conçoit alors qu'après l'installation du système, c'est-à-dire la mise en place des deux parties de celui-ci, un opérateur de montage bascule le commutateur 17 dans sa position d'initialisation du système.

Ceci permet aux moyens d'alimentation 16 des moyens 5 d'émission du faisceau optique d'alimenter ceux-ci avec un rapport cyclique élevé, ce qui facilite le réglage de l'alignement des deux parties du système dans la mesure où le spot du faisceau est alors devenu mieux visible par l'opérateur.

Par ailleurs, ceci permet également de déclencher le fonctionnement des moyens de réglage automatique du gain de réception du faisceau, 14 et 15, et des moyens de stockage de la valeur d'intensité de faisceau de référence 12, à travers des moyens de déclenchement désignés par la référence générale 18 sur cette figure, également commandés par le commutateur 17.

Une fois la phase d'initialisation terminée, l'opérateur de montage bascule le commutateur 17 dans la position de fonctionnement normal du système pour d'une part, basculer le rapport cyclique des moyens d'alimentation des moyens d'émission vers sa valeur faible afin de réduire la consommation du système et d'autre part, figer la valeur d'intensité de faisceau de référence et le réglage du gain de réception.

Il va de soi bien entendu que le réglage du gain peut également être appliqué à l'émission du faisceau pour établir le signal d'entrée des moyens d'analyse, représentatif du faisceau réfléchi, dans la plage de valeurs prédéterminées.

Si l'on revient maintenant à la figure 1, on peut également constater que dans l'exemple décrit, les moyens d'émission 5 du faisceau sont placés derrière des moyens de déviation 19 du faisceau réfléchi à destination des moyens de réception et sont adaptés pour émettre ce faisceau à travers une portion transparente à ce faisceau de ces moyens de déviation 19.

A titre d'exemple, les moyens de déviation peuvent comprendre un miroir troué ou encore une lame semi-réfléchissante.

On conçoit que le système qui vient d'être décrit présente un certain nombre d'avantages dans la mesure où l'utilisation d'un faisceau laser dans un tel détecteur de fumée optique permet d'améliorer la sensibilité de détection et d'obtenir une plus grande portée de détection qu'avec les systèmes de l'état de la technique.

La disposition particulière des moyens d'émission derrière les moyens de déviation permet également d'améliorer le rendement optique sur le signal réfléchi, tandis que le commutateur permet de déclencher une phase d'initialisation facilitant la mise en oeuvre du système.

## Revendications

1. Système de détection de fumée du type comportant deux parties (1,2) destinées à être placées à distance l'une de l'autre et comportant l'une, des moyens formant réflecteur (3) adaptés pour réfléchir un faisceau optique (4) en provenance de moyens d'émission correspondants (5) de l'autre partie du système, à destination de moyens de réception (6) de ce faisceau réfléchi, également implantés dans cette autre partie du système et des moyens d'analyse (7) de l'intensité du faisceau réfléchi pour détecter la présence de fumée entre les deux parties du système, **caractérisé en ce que** les moyens d'émission (5) sont adaptés pour émettre un faisceau optique dans la gamme des longueurs d'ondes visibles pour faciliter le réglage de l'alignement de deux parties de ce système.

2. Système selon la revendication 1, **caractérisé en ce que** les moyens d'émission (5) comprennent au moins une diode laser (8).

3. Système selon la revendication 1 ou 2, **caractérisé en ce que** les moyens d'analyse (7) comprennent des moyens de stockage (12) d'une valeur d'intensité de faisceau de référence et des moyens de comparaison (13) de l'intensité du faisceau réfléchi à cette valeur de référence pour détecter la présence de fumée entre les deux parties du système.

4. Système selon la revendication 3, **caractérisé en ce qu'**il comporte des moyens (17,18) de déclenchement de l'établissement de la valeur de référence lors d'une phase d'initialisation du système après son installation.

5. Système selon l'une quelconque des revendications précédentes, **caractérisé en ce que** les moyens d'émission (5) du faisceau sont associés à des moyens (16) d'alimentation de ceux-ci en créneaux de tension, commutables entre un premier état à rapport cyclique d'alimentation élevé lors de l'installation du système pour faciliter celle-ci et un second état à rapport cyclique faible pour réduire sa consommation en fonctionnement normal.

6. Système selon la revendication 5, **caractérisé en ce que** le rapport cyclique élevé est supérieur à 50% et le rapport cyclique faible est compris entre 0,5 et 1,5%.

7. Système selon l'une quelconque des revendications précédentes, **caractérisé en ce que** les moyens d'analyse (7) sont associés à des moyens (14,15,17,18) de réglage automatique du gain d'émission/réception du faisceau pour, lors d'une phase d'initialisation du système après son installation, établir le signal d'entrée de ces moyens d'analyse, représentatif du faisceau réfléchi, dans une plage de valeurs prédéterminées.

8. Système selon la revendication 7, **caractérisé en ce qu'**il comporte des moyens d'indication du niveau de correspondance entre le signal d'entrée des moyens d'analyse et la plage de valeurs prédéterminées.

9. Système selon l'une quelconque des revendications précédentes, **caractérisé en ce que** les moyens (5) d'émission du faisceau sont placés derrière des moyens (19) de déviation du faisceau réfléchi à destination des moyens de réception (6) et sont adaptés pour émettre ce faisceau à travers une portion transparente à celui-ci de ces moyens de déviation.

10. Système selon la revendication 9, **caractérisé en ce que** les moyens de déviation (19) comprennent un miroir troué.

11. Système selon l'une quelconque des revendications 1 à 9, **caractérisé en ce que** les moyens de déviation (19) comprennent une lame semi-réfléchissante.
